(19)

Europäisches Patentamt
European Patent Office
Office européen des brevets

(11) **EP 4 531 141 A1**

(12) **EUROPEAN PATENT APPLICATION**
published in accordance with Art. 153(4) EPC

(43) Date of publication:
02.04.2025 Bulletin 2025/14

(21) Application number: 23941423.8

(22) Date of filing: 27.12.2023

(51) International Patent Classification (IPC):
$H01M\ 4/525^{(2010.01)}$ $\qquad$ $H01M\ 4/505^{(2010.01)}$
$H01M\ 10/052^{(2010.01)}$ $\quad$ $H01M\ 10/0525^{(2010.01)}$
$C01G\ 53/00^{(2025.01)}$

(52) Cooperative Patent Classification (CPC):
Y02E 60/10

(86) International application number:
PCT/CN2023/142531

(87) International publication number:
WO 2024/255203 (19.12.2024 Gazette 2024/51)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 15.06.2023 CN 202310705475

(71) Applicant: Ningbo Ronbay New Energy
Technology Co., Ltd.
Yuyao Ningbo, Zhejiang 315402 (CN)

(72) Inventors:
• YIN, Chong
  Ningbo, Zhejiang 315402 (CN)
• SUN, Weili
  Ningbo, Zhejiang 315402 (CN)
• LIANG, Shunchao
  Ningbo, Zhejiang 315402 (CN)
• MENG, Xianghe
  Ningbo, Zhejiang 315402 (CN)

(74) Representative: Bandpay & Greuter
11, rue Christophe Colomb
75008 Paris (FR)

(54) **POSITIVE ELECTRODE MATERIAL AND PREPARATION METHOD THEREFOR, AND LITHIUM-ION BATTERY**

(57) Provided are a positive electrode material, a preparation method thereof and a lithium-ion battery. The positive electrode material has a composition as represented by formula (I): $Ni_xCo_yMn_{1-x-y}D_kLi_zO_2$ (I); where value ranges of x, y, z and k in the positive electrode material are respectively as follows: $0.6<x<1$, $0<y<0.2$, and $x+y<1$; $1\leq z\leq 1.05$, $0\leq k\leq 0.05$; D is a modifying element including at least one of S, P, F, B, Al, Ti, Mg, Cr, Zr, V, Nb, Y, W, Ta, Co, Ce and Zn. A three-electrode battery cell is prepared with the positive electrode material of the present invention, and a change rate of an electrochemical active surface area of the positive electrode material is less than 5% during charge and discharge cycles of the three-electrode battery cell. The positive electrode material provided by the present invention can effectively inhibit the increase of ECSA as the cycle proceeds, reduce an interfacial side reaction and improve cycling stability.

FIG. 7

EP 4 531 141 A1

## Description

The present application claims priority to Chinese Patent Application No. 202310705475.X, entitled "POSITIVE ELECTRODE MATERIAL, PREPARATION METHOD THEREOF AND LITHIUM-ION BATTERY", filed with the China National Intellectual Property Administration on June 15, 2023, which is hereby incorporated by reference in its entirety.

## TECHNICAL FIELD

The present invention relates to the technical field of battery materials and, in particular, to a positive electrode material, a preparation method thereof and a lithium-ion battery.

## BACKGROUND

With the promotion and popularization of new energy concepts, the importance of lithium-ion batteries in the field of electric vehicles and energy storage has become increasingly prominent. The positive electrode material serves as an important component of the lithium-ion battery, and its properties directly affect various performances of the lithium-ion battery. The electrochemical active surface area (Electrochemical Active Surface Area, ECSA) of the positive electrode material refers to a surface area of the positive electrode material that is in direct contact with an electrolyte and is capable of undergoing a charge transfer reaction. A larger ECSA facilitates rapid intercalation and de-intercalation of lithium-ions, and enhances a charge/discharge rate capability of the positive electrode material, but also leads to an accelerated rate of side reactions between the positive electrode material and the electrolyte, impairing a cycling stability of the material.

During the cycling process, the ECSA of the positive electrode material is not constant. Particles of the positive electrode material will be gradually broken during the cycling process, resulting in an increased ECSA and accelerated interfacial side reactions.

## SUMMARY

In order to solve the above problems, the present invention provides a positive electrode material with a small change rate of the ECSA.

Specifically, the present invention provides a positive electrode material, having a composition as shown by formula (I):

$$Ni_xCo_yMn_{1-x-y}D_kLi_zO_2 \qquad (I).$$

In the positive electrode material, value ranges of x, y, z and k are respectively as follows: $0.6<x<1$, $0<y<0.2$, and $x+y<1$; $1\leq z\leq1.05$, $0\leq k\leq0.05$; where D is a modifying element, and the modifying element includes at least one of S, P, F, B, Al, Ti, Mg, Cr, Zr, V, Nb, Y, W, Ta, Co, Ce and Zn; a value range of a compaction density, PD, of a positive electrode piece prepared by the positive electrode material is as follows: $3.0g/cm^3 < PD < 3.8g/cm^3$; a particle size distribution of the positive electrode material is as follows: $D10<8\mu m$, $5\mu m<D50<15\mu m$, $10\mu m<D90<30\mu m$; a value range of a lithium-nickel mixing degree, Li/Ni mixing, of the positive electrode material is as follows: $0%<Li/Ni \ mixing< 2.5%$; a three-electrode battery cell is prepared with the positive electrode material, and a change rate of electrochemical active surface area *a* of the positive electrode material is less than 5% during a charge and discharge cycle of the three-electrode battery cell.

In the technical solution, the compaction density of material is one of reference indexes of the energy density of material, and the magnitude of the compaction density has a certain relationship with the particle size, particle gradation of the positive electrode material and so on. The electrode piece prepared from the positive electrode material provided by the present invention has a compaction density of $3.0g/cm^3<PD<3.8g/cm^3$, and has a uniform particle size distribution, so that the battery prepared from the positive electrode material has higher capacity.

In the present application, the sum of positive and negative valences of respective elements of the positive electrode material is zero.

The positive electrode material in the present application is a material which takes a nickel-cobalt-manganese ternary as a matrix, and may further include a modifying element. The modifying element may be a doping element or a coating element. Specifically, the doping element includes at least one of S, P, F, B, Al, Ti, Mg, Cr, Zr, V, Nb, Y, W and Ta, and the coating element includes at least one of Co, P, F, B, Al, Ti, Mg, Cr, Zr, Ce, W and Zn. In the present invention, the positive electrode material is limited by its composition and the proportions of respective elements, where the cobalt element, as one element of the nickel-cobalt-manganese ternary material, may also be applied to the positive electrode material as a coating element. Therefore, the content of the cobalt element is limited from two perspectives, which is described here.

The positive electrode material provided by the present invention is a high-nickel polycrystalline material, which has excellent kinetic performance and high specific capacity. In the positive electrode material, the nickel content is higher. In terms of molar ratio, the nickel element accounts for 60% or more of the sum of three elements of nickel, cobalt, and manganese. Meanwhile, an amount of substance of the lithium element exceeds the sum of those of the three elements of nickel, cobalt and manganese. Further, in the positive electrode material, the higher the lithium-nickel mixing degree is, the more seriously lithium and nickel is mixed, which is likely to exacerbate interfacial side reactions, and make the positive electrode material easy to collapse in the charge and discharge process, hindering the deintercalation of lithium-ions, and thus reducing the electrochemical performance of the positive electrode material. The lithium-nickel mixing degree of the positive electrode material of the present application is obtained through an XRD refinement, and the lithium-nickel mixing degree is not more than 2.5%, so that the electrochemical performance of the positive electrode material is effectively guaranteed.

The unit cell parameter of the positive electrode material will change significantly during the charge and discharge process. The unit cell parameter first increases slightly and then decreases significantly during the charging, while the opposite occurs during the discharging process, which results in large stress inside the material, and results in cracks or particle breakage in severe cases. If particles of the positive electrode material are broken, the electrochemical active surface area (ECSA) of the positive electrode material will increase, the active surface in contact with an electrolyte will increase and side reactions will be aggravated, resulting in a decrease of the cycle stability of the battery. Therefore, the change rate of electrochemical active surface area is also an important measure indicator during the cycling process. The electrochemical active surface area of the positive electrode material provided by the present invention shows high stability, and its change rate is not more than 5% during the cycling process, so that batteries prepared by using the positive electrode material exhibit higher cycling capacity retention rate and lower growth rate of direct-current internal resistance.

Further, a calculation method of the change rate of electrochemical active surface area $a$ is represented by formula (II):

$$a = (S_n - S_0)/n \times 100\% \quad (II);$$

where n is a number of the charge and discharge cycle of the three-electrode battery cell, $S_0$ is an electrochemical active surface area of the positive electrode material at a first cycle of the three-electrode battery cell; $S_n$ is an electrochemical active surface area of the positive electrode material after n charge and discharge cycle of the three-electrode battery cell.

In the technical solution, the change rate of electrochemical active surface area is the ratio of the change value $(S_n - S_0)$ of the electrochemical active surface area of the three-electrode battery cell before and after n charge and discharge cycle to the number of charge and discharge cycle n. The change rate of electrochemical active surface area $a$ may accurately measure the degree of change in the electrochemical active surface area after each cycle on average. $S_0$ is an electrochemical active surface area of the positive electrode material at a first cycle of the three-electrode battery cell, which is defined as 1 in the actual application process, so the calculation of the change rate of the electrochemical active surface area $a$ may be simplified as $a = (S_n - 1)/n \times 100\%$. In the test process, the number of charge and discharge cycle n is generally set within 50 cycles.

Further, the electrochemical active surface area is obtained by the following method: testing a positive electrode overpotential response $\eta$ of the three-electrode battery cell caused by an exciting current I; performing least-square fitting on exciting currents I with different current sizes and corresponding positive electrode overpotential responses $\eta$ through a Bulter-Volmer equation to obtain the electrochemical active surface area of the positive electrode material.

In the technical solution, the electrochemical active surface area of the material is calculated by fitting the Bulter-Volmer equation for different exciting currents I and corresponding positive electrode overpotential responses $\eta$, realizing dynamic analysis of the performance of the battery cell and being suitable for battery cells with different material performances. On the other hand, test results obtained by this method are more accurate, and the fitting method is simple, does not involve complex mathematical derivation and can be obtained directly through the model reasoning of Bulter-Volmer equation, which is more versatile.

Further, the Bulter-Volmer equation expresses a relationship between the exciting current I and an exchange current $i_0$;

where the exchange current $i_0$ is proportional to the electrochemical active surface area; and the exchange current $i_0$ is a product of the electrochemical active surface area and a proportional coefficient.

It should be noted that the prototype of the Bulter-Volmer equation can be found in Formula (IV), which is quoted from the textbook Electrochemical Systems, Fourth Edition, Publisher: John Wiley and Sons Ltd.

$$i_n = i_0 \left\{ exp \left[ \frac{(1-\beta)nF}{RT} \right] - exp \left( -\frac{\beta nF}{RT} \eta_s \right) \right\}$$

$$i_0 = nFk_a^\beta k_c^{1-\beta} c_R^\beta c_O^{1-\beta}$$

Formula (IV).

In the technical solution, $i_n$ is a net current; and $i_0$ is an exchange current. In an equilibrium state, the forward and reverse reaction rates are equal and the currents are mutually offset, thus the net current is 0. At this time, the absolute value of the currents of the forward/reverse reactions is the exchange current $i_0$, which is affected by concentrations of redox substances $C_R$ and Co on the surface of the material. In the test process, for the changing net current $i_n$, the larger the electrochemical active surface area of the material is, the smaller the change of the concentrations of redox substances $C_R$ and Co on the surface of the material is, and thus the smaller the change of the exchange current $i_0$ is, indicating that there is a negative correlation between the electrochemical active surface area of the material and the change rate of the exchange current $i_0$. Further, the normalized electrochemical active surface area A is taken as a variable, the other parameter is expressed by a proportional coefficient N, and the relationship among the two and the exchange current $i_0$ is established. Briefly, the exchange current $i_0$ in the Bulter-Volmer equation is defined as the product of the electrochemical active surface area A and the proportional coefficient N.

In the present invention, the exciting current I is also the net current $i_n$ in the prototype of Bulter-Volmer equation. The proportional coefficient N and the electrochemical active surface area A are fitted by multiple groups of different exciting currents I and the corresponding positive electrode overpotential responses η.

Further, the values of the proportional coefficient N and the electrochemical active surface area A may be obtained by performing least-square fitting on the exciting currents I with different current sizes and corresponding positive electrode overpotential responses η through the Bulter-Volmer equation.

Further, the Bulter-Volmer equation is represented by Formula (III):

$$I = N \cdot \frac{1}{R_{CT}} \cdot A \cdot \left[ e^{\frac{0.5 \cdot F \cdot (\eta - I \cdot R_S - I \cdot R_{SEI})}{RT}} - e^{\frac{-0.5 \cdot F \cdot (\eta - I \cdot R_S - I \cdot R_{SEI})}{RT}} \right] \quad (III)$$

where I is the exciting current, N is the proportional coefficient obtained by fitting, RS is ohmic impedance, $R_{SEI}$ is interfacial impedance, $R_{CT}$ is charge transfer impedance, F is Faraday constant, R is gas constant, T is temperature of the three-electrode battery cell during a test, A is electrochemical active surface area obtained by fitting, and η is positive electrode overpotential response.

In the technical solution, a specific representation of the Bulter-Volmer equation is provided, where the ohmic impedance $R_S$, the interfacial impedance $R_{SEI}$ and the charge transfer impedance $R_{CT}$ can be obtained by testing and fitting. Faraday constant F is the product of Avogadro constant NA and elementary charge e, which is generally considered as 96485.3383±0.0083C/mol. Gas constant R is 8.314J/(mol·K). The magnitude of the proportional coefficient N is related to the components, the specific surface area, etc. of the material. For the positive electrode material provided by the present invention, when the magnitude of the specific surface area BET is shown by 0.2m²/g < BET < 3.5m²/g, the numerical range of the proportional coefficient N obtained by fitting is as follows: -0.03 <N<-0.002.

The present invention further provides a preparation method of the positive electrode material, which includes the following steps: primary calcination: calcining a nickel-cobalt-manganese ternary precursor to obtain an oxide precursor $P_1$; secondary calcination: mixing the oxide precursor $P_1$ with a first lithium source, and calcining to obtain an oxide precursor $P_2$; tertiary calcination: mixing the oxide precursor $P_2$ with a second lithium source, and calcining to obtain the positive electrode material.

In the synthesis process of the high-nickel polycrystalline positive electrode material, the calcination process is the most central part. The preparation method provided by the present invention is synthesized by a refined lithium distribution and a multi-stage sintering process. Specifically, firstly, the nickel-cobalt-manganese precursor is subjected to the primary calcination, lithium required in the positive electrode material is added by two times, and the secondary calcination and the tertiary calcination are performed respectively. The purpose of mixing of the lithium source many times for calcination is to change the size and stacking number of the primary particles, thereby changing the ECSA variation during the cycling of the positive electrode material. Generally speaking, the positive electrode materials are approximately spherical particles microscopically, and one spherical particle is formed by stacking of many irregular small particles. The irregular small particle is called "primary particle", and the spherical particle obtained by stacking of the primary particles is called "secondary particle". That is, the secondary particle is formed by the stacking of the primary particles. In a conventional primary lithium mixing and sintering process, the obtained primary particles are relatively small, and each secondary particle requires a large number of primary particles. In the present invention, the primary particles of the positive electrode material obtained by mixing the lithium source and calcining by two times are larger in size, and if the secondary particles with the same size are stacked, the required primary particles are less. Initially, the ECSA of the material particle is the surface area of the secondary particle. However, as the cycling process proceeds, the secondary particles are broken by the influence of the unit cell stress, and the primary particles inside the secondary particles are gradually exposed to the electrolyte, contributing additional reaction surface area. Samples obtained by the conventional primary lithium mixing and sintering exhibit a rapid growth of the ECSA after being broken due to the primary particles being small and numerous. On the contrary, samples obtained by multi-stage lithium mixing and sintering in the present invention exhibit a small ECSA increase since the primary particles have a large size and a small number, and the secondary particles only additionally expose a small reactive surface area even if they are broken.

Further, an amount of substance $M_1$ of lithium element in the first lithium source and a sum of amounts of substance $M_0$ of nickel element, cobalt element and manganese element in the nickel-cobalt-manganese ternary precursor satisfy: $0 < M_1/M_0 \leq 0.8$. An amount of substance $M_2$ of lithium element in the second lithium source, the amount of substance $M_1$ of lithium element in the first lithium source and the sum of amounts of substance $M_0$ of nickel element, cobalt element and manganese element in the nickel-cobalt-manganese ternary precursor satisfy: $1-M_1/M_0 \leq_2/M_0 \leq 1.05-M_1/M_0$.

In the technical solution, the total addition amount of the lithium element is 1-1.05 times the sum of amounts of substance of nickel, coating and manganese. The lithium element is added for the first time in an amount not exceeding 80% of the total amount of the lithium element. Therefore, the particle size and stacking number of the positive electrode material obtained by sintering are more excellent.

Further, the atmosphere for the primary calcination is a reaction atmosphere containing oxygen; and/or the atmosphere for the secondary calcination is oxygen; and/or the atmosphere for the tertiary calcination is oxygen; and/or the first lithium source includes lithium hydroxide monohydrate; and/or the second lithium source includes lithium hydroxide monohydrate.

In the technical solution, the calcination may be completed by the first reaction atmosphere including oxygen, and specifically, air or a mixed gas of other gas and oxygen may be used. However, in the process of the secondary calcination and the tertiary calcination, the second reaction atmosphere is oxygen, which can cause the valence state of most nickel in the material to be +3; and the material cannot be sintered into a layered phase if the material is calcined in air. Both the first lithium source and the second lithium source are preferably lithium hydroxide monohydrate. The lithium hydroxide monohydrate requires a low sintering temperature and can be fully calcined, and thus the particle size of the positive electrode material obtained by sintering is more uniform.

Further, the first lithium source includes lithium hydroxide monohydrate and a lithium salt, and the lithium salt includes at least one of lithium carbonate, lithium nitrate, lithium phosphate, lithium formate, lithium acetate and lithium ethoxide; and/or the second lithium source includes lithium hydroxide monohydrate and a lithium salt, and the lithium salt includes at least one of lithium carbonate, lithium nitrate, lithium phosphate, lithium formate, lithium acetate and lithium ethoxide; and/or process conditions of the primary calcination include: a heating rate of 2-5°C/min, a calcination temperature of 300-500°C, and a calcination time of 1-5h; and/or process conditions of the secondary calcination include: a heating rate of 2-5°C/min, a calcination temperature of 600-1000°C, a calcination time of 2-8h, and a cooling rate controlled to 2-5°C/min; and/or process conditions of the tertiary calcination include: a heating rate of 2-5°C/min, a calcination temperature of 600-1000°C, a calcination time of 6-20h, and a cooling rate controlled to 2-5°C/min.

In the technical solution, the first lithium source and the second lithium source include a mixture of lithium hydroxide monohydrate and other lithium salt, and lithium salt is selected from at least one of lithium carbonate, lithium nitrate, lithium phosphate, lithium formate, lithium acetate and lithium ethoxide. The combination of lithium hydroxide monohydrate and lithium salt may provide several alternative solutions and are sintered to obtain the positive electrode material provided by the present invention. The material is just cooled along with the furnace after the primary calcination is finished, and the cooling rate needs to be controlled after the secondary calcination and the tertiary calcination are finished.

Further, in steps of tertiary calcination, a dopant, the oxide precursor $P_2$ and the second lithium source are mixed and calcined, where the dopant includes at least one element of S, P, F, B, Al, Ti, Mg, Cr, Zr, V, Nb, Y, W and Ta.

In the technical solution, the dopant is a substance containing a doping element. The dopant is added in the tertiary calcination stage, so that the structural stability of the bulk phase of the material can be improved, and the transition metal migration and phase transition in the bulk phase of the material during the long-cycling process can be inhibited.

Further, the preparation method further includes performing a sintering for modification on the positive electrode material for one or more times; where the sintering for modification includes mixing and sintering the positive electrode material and a coating agent, and a sintering temperature of the sintering for modification is not more than 600°C, where the coating agent includes at least one element of Co, P, F, B, Al, Ti, Mg, Cr, Zr, Ce, W and Zn.

In the technical solution, the sintering for modification can also be performed on the positive electrode material, and the coating agent is also a substance containing a coating element. When the sintering temperature during the sintering for modification is too high, the structure of secondary particles in the positive electrode material will be damaged. Therefore, the temperature of the sintering for modification needs to be controlled below 600°C. Specifically, the temperature of the sintering for modification is 300-600°C, and the sintering time is 2-6 hours.

The present invention further provides a battery which includes the positive electrode material of any of the above technical solutions. Therefore, the battery has all the beneficial effects of any of the above technical solutions, which is not repeated here.

BRIEF DESCRIPTION OF DRAWINGS

The foregoing and/or additional aspects and advantages of the present invention will become apparent and be readily understood from the following description of the embodiments in conjunction with the accompanying drawings, in which:

FIG. 1 is a fitting diagram of a charging current and an overpotential of a positive electrode material H1 according to an embodiment of the present invention;
FIG. 2 shows an ECSA change rate of a positive electrode material H1 according to an embodiment of the present invention;
FIG. 3 is a fitting diagram of a charging current and an overpotential of a positive electrode material Q1 according to an embodiment of the present invention;
FIG. 4 shows an ECSA change rate of a positive electrode material Q1 according to an embodiment of the present invention;
FIG. 5 shows a comparison of cycle capacity retention rates of a positive electrode material H1 and a positive electrode material Q1 according to an embodiment of the present invention;
FIG. 6 is a SEM image of a positive electrode material Q1 according to an embodiment of the present invention; and
FIG. 7 is a SEM image of a positive electrode material H1 according to an embodiment of the present invention.

DESCRIPTION OF EMBODIMENTS

In order to make the above objects, features and advantages of the present invention more obvious and understandable, the technical solutions in embodiments of the present invention will be clearly and comprehensively described below. Apparently, the described embodiments are merely a part of rather than all embodiments of the present invention. All other embodiments obtained by persons of ordinary skill in the art based on embodiments of the present invention without creative labor belong to the protection scope of the present disclosure.

Embodiments of the present invention provide a preparation method of a positive electrode material, the prepared positive electrode material and a battery prepared by the positive electrode material.

On the one hand, since particles of the positive electrode material are broken in the cycling process, which results in a larger change rate of the electrochemical active surface area; and the preparation method provided by the embodiments adopts a refined lithium distribution and a multi-stage sintering process. Primary particles of the positive electrode material obtained by sintering with two additions of lithium sources are larger, so that when the secondary particles are broken in the cycling process, the change rate of the electrochemical active surface area is smaller.

On the other hand, there are a variety of methods for determining the electrochemical active surface area in the related art. For example, ECSA is directly estimated by a gas adsorption BET specific surface area test method. This method utilizes the adsorption characteristics of particle surface to gas to estimate the surface area, and has the advantages of high test speed and good test stability. However, the surface area measured by the BET method is not exactly identical to the ECSA, and the BET surface area measures the surface size associated with gas adsorption; while the ECSA measures the surface size in contact with electrolyte solution. The two may be quite different for porous electrode materials. In addition, the BET test method is only applicable to the test of an initial electrode powder sample and is not applicable to the test of the electrode material in a battery cell, because in most cases, the electrode material in the battery cell has been mixed with conductive carbon, binder, etc., which is not easy to be separated out, and the BET test method cannot distinguish the surface area of the electrode material alone.

For example, the electrochemical impedance spectroscopy (Electrochemical Impedance Spectroscopy, EIS) testing and the equivalent circuit fitting method are also common methods for determining the ECSA. The resistance response and capacitance response of a charge transfer reaction may be obtained by the EIS testing and fitting of the battery cell. The capacitance response is closely related to the ECSA of the electrode material, and may represent the relative magnitude of the ECSA. However, the surface of the electrode material is rough and porous in fact, and its capacitance response does not appear in the form of a pure capacitance component, but is manifested by some kind of constant-phase element, which makes it difficult to obtain the capacitance value. Therefore, the EIS fitting method for determining the ECSA has large limitations and also leads to large errors and mistakes in the results due to uncertainties in the model construction.

In addition, cyclic voltammetry (CV) may also be used as an ECSA determination method. ECSA may be fitted by CV tests with different sweep speeds, but CV testing of ECSA needs to select a reasonable sweep voltage or search a suitable supporting electrolyte to avoid the Faraday reaction interval of the substance to be tested, which makes it difficult to measure ECSA by CV method in electrode materials.

In this embodiment, for the determination of ECSA, the electrochemical active surface area of the material is calculated by fitting the Bulter-Volmer equation for different exciting currents I and corresponding positive electrode overpotential responses η.

Embodiment 1

This embodiment provides a preparation method of a positive electrode material, including the following steps.

S10, primary calcination: obtaining a nickel-cobalt-manganese ternary precursor $Ni_{0.85}Co_{0.1}Mn_{0.05}(OH)_2$, and calcining $Ni_{0.85}Co_{0.1}Mn_{0.05}(OH)_2$ in air to obtain an oxide precursor P1.

The process parameters of the primary calcination are as follows: the heating rate of 5°C/min, the calcination temperature of 500°C, and the calcination time of 2h.

S20, secondary calcination: calcining the oxide precursor P1 and a first lithium source in oxygen to obtain an oxide precursor P2. The first lithium source is lithium hydroxide monohydrate.

The amount of substance $M_1$ of lithium element in the first lithium source and the sum of amounts of substance $M_0$ of nickel element, cobalt element and manganese element in the nickel-cobalt-manganese ternary precursor satisfy: $M_1/M_0=0.4$.

The process conditions of the secondary calcination include: the heating rate of 2°C/min, the calcination temperature of 600°C, the calcination time of 2h, and the cooling rate controlled to 2°C/min.

S30, tertiary calcination: calcining the oxide precursor P2 and a second lithium source in oxygen to obtain a positive electrode material H1. The second lithium source is a mixture of lithium hydroxide monohydrate and lithium nitrate (molar ratio 8:2).

The amount of substance $M_2$ of lithium element in the second lithium source and the sum of amounts of substance $M_0$ of nickel element, cobalt element and manganese element in the nickel-cobalt-manganese ternary precursor satisfy: $M_2/M_0=0.6025$.

The process conditions of the tertiary calcination include: the heating rate of 2°C/min, the calcination temperature of 750°C, the calcination time of 12h, and the cooling rate controlled to 2°C/min.

The change rate of ECSA of the above positive electrode material is determined as follows.

1. 9.5 g of the positive electrode material H is taken; a slurry is prepared according to the positive electrode material: HVDF: SH = 95:2.5:2.5, and coated on an aluminum foil to form an electrode piece, and the surface density of the electrode piece is controlled to be $15mg/cm^2$; the electrode piece is punched into small discs with a diameter of 1.5cm; small discs are assembled into two button-type three-electrode batteries, noted as batteries H1-1 and H1-10; and the three-electrode lithium plating is completed.
2. The battery H1-1 is fully charged and left to stand for 1 hour, the equilibrium voltage is recorded, the EIS is tested, and the ohmic impedance $R_S$, the interfacial impedance $R_{SEI}$, and the charge transfer impedance $R_{CT}$ are fitted.
3. The battery H1-1 is charged with direct current for 10s for several times, and is left to stand for 60s after each charge to recover to the equilibrium state. The charging exciting current I is 0mA, 0.1mA, 0.2mA, 0.4mA, 0.6mA, 0.8mA, 1.2mA, 1.5mA, and 2mA in sequence. The positive-reference voltage at the end of each charging step is recorded, and the difference between this voltage and the equilibrium voltage is the positive overpotential response η.
4. Different exciting currents I and the corresponding positive electrode overpotential responses η of the battery H1-1, and the ohmic impedance $R_S$, the interfacial impedance $R_{SEI}$ and the charge transfer impedance $R_{CT}$ that are obtained by fitting are substituted into the Bulter-Volmer equation for data fitting. The ECSA of the positive electrode material of the battery H1-1 is set to 1 (i.e., A=1), and the fitting is performing to obtain the proportional coefficient N to be -0.059.

The Bulter-Volmer equation has the following form:

$$I = N \cdot \frac{1}{R_{CT}} \cdot A \cdot \left[ e^{\frac{0.5 \cdot F \cdot (\eta - I \cdot R_S - I \cdot R_{SEI})}{RT}} - e^{\frac{-0.5 \cdot F \cdot (\eta - I \cdot R_S - I \cdot R_{SEI})}{RT}} \right]$$

where I is the exciting current, N is the proportional coefficient obtained by fitting, $R_S$ is ohmic impedance, $R_{SEI}$ is interfacial impedance, $R_{CT}$ is charge transfer impedance, F is Faraday constant, R is gas constant, T is temperature of the three-electrode battery cell during a test, A is the electrochemical active surface area obtained by fitting, and η is the positive electrode overpotential response.

5. The battery H1-10 is subjected to 10 cycles at a high temperature 45°C and then fully charged, and operations of the above steps 2 and 3 are performed. Similarly, different exciting currents I and the corresponding positive electrode overpotential responses $\eta$, and the ohmic impedance $R_S$, the interfacial impedance $R_{SEI}$ and the charge transfer impedance $R_{CT}$ that are obtained from fitting are substituted into the above Bulter-Volmer equation for data fitting. The proportional coefficient is set to be equal to that of the battery H1-1, i.e., N = -0.059. The ESCA of the positive electrode material of the battery H1-10 relative to the positive electrode material of the battery H1-1 obtained by fitting according to the above method is 1.27. Therefore, the change rate of the ESCA $a$ is (1.27-1)/10×100%=2.7%.

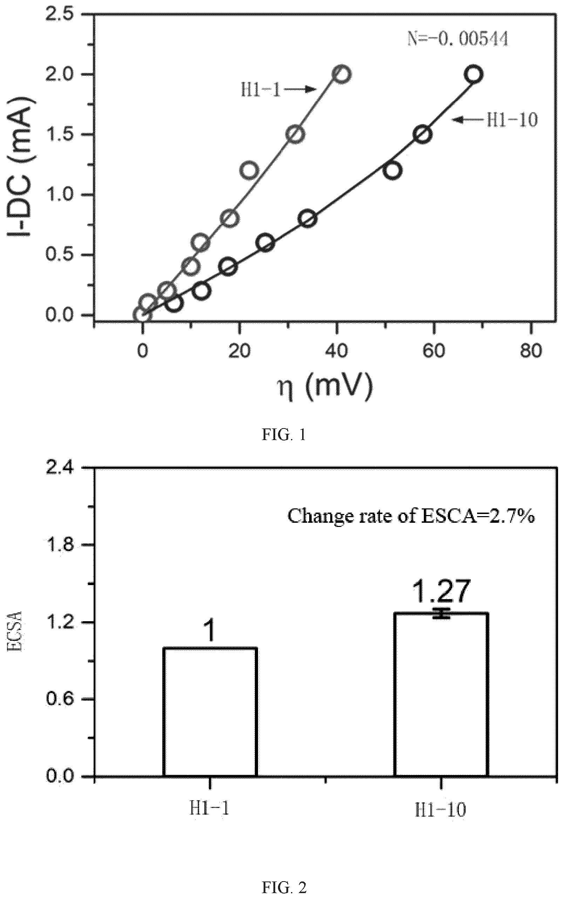

FIG. 1 is a fitting diagram of the exciting current I and the positive overpotential response $\eta$ in this embodiment. FIG. 2 shows the relative values and the change rate of the ECSA $a$ obtained by fitting in this embodiment.

Comparative Embodiment 1

Samples in this embodiment are synthesized by a conventional primary sintering process. Referring to the ratio of each element in Embodiment 1, the nickel-cobalt-manganese ternary precursor $Ni_{0.85}Co_{0.1}Mn_{0.05}(OH)_2$ and lithium hydroxide monohydrate are mixed, heated under an oxygen atmosphere to 500°C at 2°C/min and then kept for 2h, and then heated to 750°C at 2°C/min and then kept for 12h for sintering, obtaining $Li_{1.025}Ni_{0.85}Co_{0.1}Mn_{0.05}O_2$ (noted as positive electrode material Q1).

The change rate of the ECSA of the positive electrode material Q is measured, and the specific steps are the same as those in Embodiment 1. 9.5 g of the positive electrode material Q1 is taken to prepare a slurry, and the slurry is prepared into an electrode piece. The electrode piece is punched and assembled into two button-type three-electrode batteries, noted as batteries Q1-1 and Q1-10. The three-electrode lithium plating is completed. The battery Q1-1 is fully charged and left to stand for 1 hour for testing. The battery Q1-10 is subjected to 10 cycles at a high temperature of 45°C and then fully charged for testing. According to the above method, the ESCA of the positive electrode material of the battery Q1-10 relative to the positive electrode material of the battery Q1-1 obtained by fitting according to the above method is 1.82. Therefore, the change rate of the ESCA is that (1.82-1)/10×100%=8.2%.

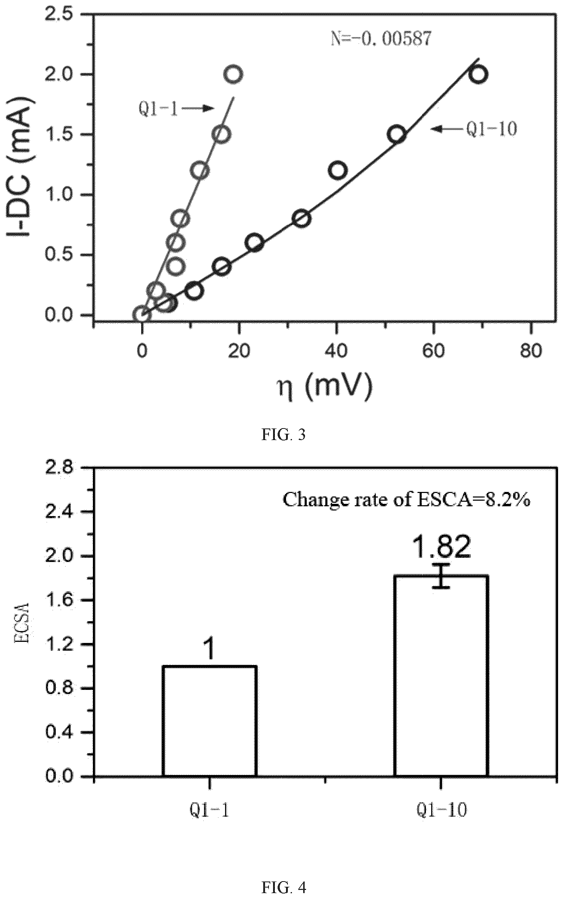

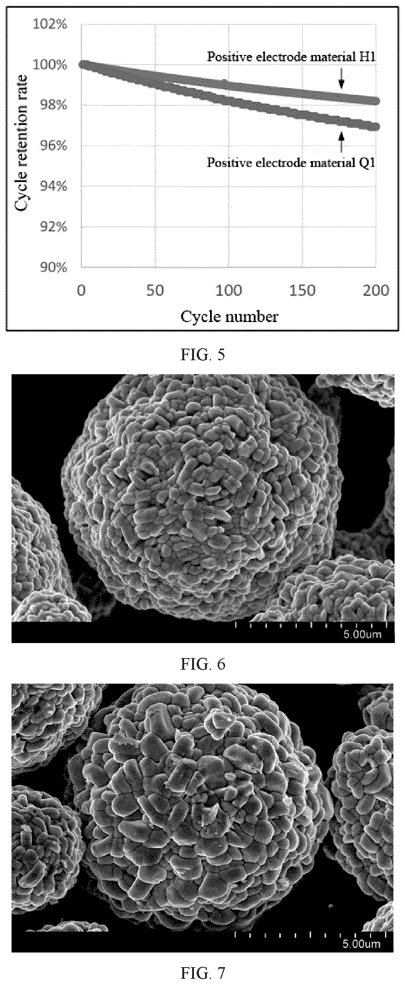

FIG. 3 is a fitting diagram of the exciting current I and the positive overpotential response $\eta$ in this comparative embodiment. FIG. 4 shows the relative values and the change rate $a$ of the ECSA obtained by fitting in this comparative embodiment. Since the change rate of the ECSA of the positive electrode material Q1 is greater than 5%, indicating that the cycle stability of positive electrode material Q is poor. The cycle comparison between the positive electrode material H1 and the positive electrode material Q1 is shown in FIG. 5.

Table 1

| Positive electrode material | BET (m²/g) | D50 (μm) | D10 (μm) | D90 (μm) | D99 (μm) | Dmax (μm) | Dmin (μm) |
|---|---|---|---|---|---|---|---|
| H1 | 0.3406 | 10.216 | 5.429 | 18.444 | 25.109 | 28.767 | 2.581 |
| Q1 | 0.4616 | 9.814 | 5.33 | 17.558 | 23.688 | 27.789 | 2.994 |

Test parameters of the positive electrode material H1 and the positive electrode material Q1 are shown in Table 1. FIG. 7 is an electron micrograph of the positive electrode material H1 in Embodiment 1. FIG. 6 is an electron micrograph of the positive electrode material Q1 in Comparative Embodiment 1. It can be seen that the primary particles of the positive electrode material H1 provided in Example 1 have a larger particle size, and thus have a smaller change rate of ECSA.

Embodiment 2

This embodiment provides a preparation method of a positive electrode material. The preparation steps are referred to those in Embodiment 1, with the difference that: the nickel-cobalt-manganese ternary precursor is $Ni_{0.85}Co_{0.06}Mn_{0.11}(OH)_2$; the time of the secondary calcination is 4h; and the calcination temperature of the tertiary calcination is 770°C. The obtained positive electrode material is noted as H2.

Comparative Embodiment 2

Samples in this embodiment are synthesized by a conventional primary sintering process. Referring to the ratio of each element in Embodiment 2, the nickel-cobalt-manganese ternary precursor $Ni_{0.85}Co_{0.06}Mn_{0.11}(OH)_2$ and lithium hydroxide monohydrate are mixed, heated under an oxygen atmosphere to 500°C at 2°C/min and then kept for 2h, and then heated to 770°C at 2°C/min and then kept for 12h for sintering. The obtained positive electrode material is noted as Q2.

Embodiment 3

This embodiment provides a preparation method of a positive electrode material. The preparation steps are referred to those in Embodiment 1, with the difference that: the nickel-cobalt-manganese ternary precursor is $Ni_{0.9}Co_{0.05}Mn_{0.05}(OH)_2$; the time of the secondary calcination is 4h; and the calcination temperature of the tertiary calcination is 740°C. The obtained positive electrode material is noted as H3.

Comparative Embodiment 3

Samples in this embodiment are synthesized by a conventional primary sintering process. Referring to the ratio of each element in Embodiment 3, the nickel-cobalt-manganese ternary precursor $Ni_{0.9}Co_{0.05}Mn_{0.05}(OH)_2$ and lithium hydroxide monohydrate are mixed, heated under an oxygen atmosphere to 500°C at 2°C/min and then kept for 2h, and then heated to 740°C at 2°C/min and then kept for 12h for sintering. The obtained positive electrode material is noted as Q3.

Embodiment 4

This embodiment provides a preparation method of a positive electrode material. The preparation steps are referred to those in Embodiment 1, with the difference that: the nickel-cobalt-manganese ternary precursor is $Ni_{0.92}Co_{0.03}Mn_{0.05}(OH)_2$; the time of the secondary calcination is 4h; and the calcination temperature of the tertiary calcination is 740°C. The obtained positive electrode material is noted as H4.

Comparative Embodiment 4

Samples in this embodiment are synthesized by a conventional primary sintering process. Referring to the ratio of each element in Embodiment 4, the nickel-cobalt-manganese ternary precursor $Ni_{0.92}Co_{0.03}Mn_{0.05}(OH)_2$ and lithium hydroxide monohydrate are mixed, heated under an oxygen atmosphere to 500°C at 2°C/min and then kept for 2h, and then heated to 740°C at 2°C/min and then kept for 12h for sintering. The obtained positive electrode material is noted as Q4.

Embodiment 5

This embodiment provides a preparation method of a positive electrode material. The preparation steps are referred to those in Embodiment 1, with the difference that: the nickel-cobalt-manganese ternary precursor is $Ni_{0.96}Co_{0.01}Mn_{0.03}(OH)_2$; the time of the secondary calcination is 4h; and the calcination temperature of the tertiary calcination is 730°C. The obtained positive electrode material is noted as H5.

Comparative Embodiment 5

Samples in this embodiment are synthesized by a conventional primary sintering process. Referring to the ratio of each element in Embodiment 5, the nickel-cobalt-manganese ternary precursor $Ni_{0.96}Co_{0.01}Mn_{0.03}(OH)_2$ and lithium hydroxide monohydrate are mixed, heated under an oxygen atmosphere to 500°C at 2°C/min and then kept for 2h, and then heated to 730°C at 2°C/min and then kept for 12h for sintering. The obtained positive electrode material is noted as Q5.

Embodiment 6

This embodiment provides a preparation method of a positive electrode material. The preparation steps are referred to those in Embodiment 1, with the difference that: the precursor is $Ni_{0.92}Mn_{0.08}(OH)_2$. The obtained positive electrode material is noted as H6.

Comparative Embodiment 6

Samples in this embodiment are synthesized by a conventional primary sintering process. Referring to the ratio of each element in Embodiment 6, the precursor $Ni_{0.92}Mn_{0.08}(OH)_2$ and lithium hydroxide monohydrate are mixed, heated under an oxygen atmosphere to 500°C at 2°C/min and then kept for 2h, and then heated to 750°C at 2°C/min and then kept for 12h for sintering. The obtained positive electrode material is noted as Q6.

Performance tests are conducted on the positive electrode materials provided in Embodiments 2-6 and Comparative Embodiments 2-6, and the test results are shown in Tables 2 and 3. The testing method for the change rate of the ECSA is shown in Embodiment 1. Through the comparison of each performance parameter, the positive electrode material with better performance is prepared by the preparation method of the positive electrode material provided by the embodiments of the present invention, and the capacity retention rate of the positive electrode material in the cycling process is larger, and the growth rate of the DCR is smaller.

Table 2

| Positive electrode material | BET($m^2$/g) | D10($\mu$m) | D50($\mu$m) | D90($\mu$m) |
|---|---|---|---|---|
| H2 | 0.627 | 5.462 | 9.859 | 17.205 |
| Q2 | 0.682 | 5.262 | 9.559 | 17.118 |
| H3 | 0.5636 | 2.754 | 10.463 | 18.342 |
| Q3 | 0.6045 | 2.455 | 10.278 | 18.023 |
| H4 | 0.5922 | 2.544 | 10.703 | 17.722 |
| Q4 | 0.625 | 2.653 | 10.572 | 18.021 |
| H5 | 0.5873 | 2.965 | 10.084 | 18.005 |
| Q5 | 0.6161 | 2.856 | 10.852 | 17.837 |
| H6 | 0.5735 | 2.241 | 10.406 | 18.342 |
| Q6 | 0.5983 | 2.457 | 10.372 | 18.842 |

Table 3

| Positive electrode material | Change rate of ECSA (%) | Capacity retention rate after 200 cycles at 25°C (%) | Growth rate of DCR after 200 cycles at 25°C (%) | Capacity retention rate after 200 cycles at 45°C (%) | Growth rate of DCR after 200 cycles at 45°C (%) |
|---|---|---|---|---|---|
| H2 | 3.2 | 97.24 | 1.73 | 94.88 | 7.52 |
| Q2 | 8.7 | 95.18 | 1.65 | 91.26 | 20.68 |
| H3 | 4.1 | 97.05 | 4.51 | 93.57 | 12.36 |
| Q3 | 10.6 | 94.96 | 4.18 | 90.35 | 27.25 |
| H4 | 3.9 | 96.84 | 4.67 | 93.54 | 14.53 |
| Q4 | 11.5 | 94.17 | 4.9 | 89.27 | 30.32 |
| H5 | 4.6 | 93.92 | 8.48 | 90.06 | 24.38 |
| Q5 | 11.8 | 90.85 | 11.52 | 87.69 | 72.53 |
| H6 | 4.7 | 94.77 | 7.85 | 88.63 | 25.36 |
| Q6 | 14.3 | 90.2 | 10.26 | 81.94 | 64.89 |

Embodiment 7

This embodiment provides a series of positive electrode materials and preparation methods thereof, where the preparation method of each positive electrode material is referred to that in Embodiment 1, the difference between them lies in the selection of each process parameter, and the specific process parameters are shown in Table 4.

Table 4

| Embodiment | | 7-1 | 7-2 | 7-3 | 7-4 | 7-5 |
|---|---|---|---|---|---|---|
| Primary calcination | Heating rate | 3°C/min | 2°C/min | 5°C/min | 4°C/min | 5°C/min |
| | Calcination temperature | 500°C | 500°C | 300°C | 300°C | 400°C |
| | Calcination time | 1h | 3h | 4h | 5h | 2h |

(continued)

| Embodiment | | 7-1 | 7-2 | 7-3 | 7-4 | 7-5 |
|---|---|---|---|---|---|---|
| Secondary calcination | Heating rate | 3°C/min | 5°C/min | 4°C/min | 3°C/min | 2°C/min |
| | Calcination temperature | 600°C | 800°C | 700°C | 1000°C | 900°C |
| | Calcination time | 3h | 4h | 5h | 2h | 8h |
| | Cooling rate | 3°C/min | 5°C/min | 4°C/min | 3°C/min | 2°C/min |
| Tertiary calcination | Heating rate | 2°C/min | 4°C/min | 3°C/min | 5°C/min | 5°C/min |
| | Calcination temperature | 800°C | 700°C | 1000°C | 900°C | 600°C |
| | Calcination time | 6h | 10h | 15h | 20h | 18h |
| | Cooling rate | 2°C/min | 5°C/min | 4°C/min | 3°C/min | 5°C/min |

In this embodiment, each performance parameter of the positive electrode materials was shown in Table 5.

Table 5

| Embodiment | 7-1 | 7-2 | 7-3 | 7-4 | 7-5 |
|---|---|---|---|---|---|
| Compaction density PD (g/cm$^3$) | 3 | 3.2 | 3.3 | 3.15 | 3.1 |
| XRD refined lithium-nickel mixing degree Li/Ni mixing(%) | 1 | 1 | 2 | 0.5 | 0.5 |
| Change rate of ECSA (%) | 2 | 1.2 | 3 | 4.2 | 2.3 |

Embodiment 8

This embodiment provides a positive electrode material and a preparation method thereof. The preparation method is referred to that in Embodiment 1, with the difference that: the dopant, the oxide precursor P2 and the second lithium source are mixed and calcined at the tertiary calcination in this embodiment, and the dopant is alumina.

Embodiment 9

This embodiment provides a positive electrode material and a preparation method thereof. The preparation method is referred to that in Embodiment 1, with the difference that: the dopant, the oxide precursor P2 and the second lithium source are mixed and calcined at the tertiary calcination in this embodiment, and the dopant is sulfur.

Embodiment 10

This embodiment provides a positive electrode material and a preparation method thereof. The preparation method is referred to that in Embodiment 1, with the difference that: the obtained positive electrode material is mixed with a coating agent for the sintering for modification in this embodiment.
The coating agent is red phosphorus, the sintering temperature of the sintering for modification is 500 °C, and the sintering time of the sintering for modification is 4h.

Embodiment 11

This embodiment provides a positive electrode material and a preparation method thereof. The preparation method is referred to that in Embodiment 1, with the difference that: the obtained positive electrode material is mixed with a coating agent for sintering for modification in this embodiment.
The coating agent is magnesium hydroxide, the sintering temperature of the sintering for modification is 500 °C, and the sintering time of the sintering for modification is 5h.
Each performance parameter of the positive electrode materials provided in Embodiments 8-11 are shown in Table 6.

Table 6

| Embodiment | 8 | 9 | 10 | 11 |
|---|---|---|---|---|
| Compaction density PD (g/cm$^3$) | 3.3 | 3.25 | 3.35 | 3.2 |
| XRD refined lithium-nickel mixing degree Li/Ni mixing(%) | 1.5 | 1.8 | 1 | 0.5 |
| Change rate of ECSA (%) | 2.3 | 3 | 1.6 | 3.6 |

Finally, it should be noted that the foregoing embodiments are merely intended for describing the technical solutions of the present invention other than limiting the present invention. Although the present invention is described in detail with reference to the foregoing embodiments, those of ordinary skill in the art should understand that they may still make modifications to the technical solutions described in the foregoing embodiments or make equivalent substitutions to some of technical features thereof. However, these modifications and substitutions do not make the essence of the corresponding technical solutions deviate from the spirit and scope of the technical solutions of various embodiments of the present invention.

**Claims**

1.  A positive electrode material, wherein the positive electrode material has a composition as shown by formula (I):

$$Ni_xCo_yMn_{1-x-y}D_kLi_zO_2 \qquad (I);$$

wherein value ranges of x, y, z and k in the positive electrode material are respectively as follows:

$$0.6 < x < 1, 0 < y < 0.2, \text{ and } x+y < 1;$$

$$1 \leq z \leq 1.05, 0 \leq k \leq 0.05;$$

wherein D is a modifying element, and the modifying element comprises at least one of S, P, F, B, Al, Ti, Mg, Cr, Zr, V, Nb, Y, W, Ta, Co, Ce and Zn;
a value range of a compaction density, PD, of a positive electrode piece prepared by the positive electrode material is as follows: 3.0g/cm$^3$<PD<3.8g/cm$^3$;
a particle size distribution of the positive electrode material is as follows: D10< 8$\mu$m, 5$\mu$m<D50<15$\mu$m, and 10$\mu$m<D90<30$\mu$m;
a value range of a lithium-nickel mixing degree, Li/Ni mixing, of the positive electrode material is as follows: 0% <Li/Ni mixing<2.5%;
a three-electrode battery cell is prepared with the positive electrode material, and a change rate of electrochemical active surface area *a* of the positive electrode material is less than 5% during a charge and discharge cycle of the three-electrode battery cell.

2.  The positive electrode material according to claim 1, wherein a calculation mode of the change rate of electrochemical active surface area *a* is represented by formula (II):

$$a=(S_n-S_0)/n \times 100\% \quad (II);$$

wherein n is a number of the charge and discharge cycle of the three-electrode battery cell,
$S_0$ is an electrochemical active surface area of the positive electrode material at a first cycle of the three-electrode battery cell;
$S_n$ is an electrochemical active surface area of the positive electrode material after *n* charge and discharge cycle of the three-electrode battery cell.

3.  The positive electrode material according to claim 1 or claim 2, wherein the electrochemical active surface area is obtained by following method:

testing a positive electrode overpotential response $\eta$ of the three-electrode battery cell caused by an exciting current I;

performing least-square fitting on exciting currents I with different current sizes and corresponding positive electrode overpotential responses $\eta$ through a Bulter-Volmer equation to obtain the electrochemical active surface area of the positive electrode material.

4. The positive electrode material according to claim 3, wherein the Bulter-Volmer equation expresses a relationship between the exciting current I and an exchange current $i_0$;

wherein the exchange current $i_0$ is proportional to the electrochemical active surface area;

the exchange current $i_0$ is a product of the electrochemical active surface area and a proportional coefficient.

5. The positive electrode material according to claim 4, wherein the Bulter-Volmer equation is represented by Formula (III):

$$I = N \cdot \frac{1}{R_{CT}} \cdot A \cdot \left[ e^{\frac{0.5 \cdot F \cdot (\eta - I \cdot R_S - I \cdot R_{SEI})}{RT}} - e^{\frac{-0.5 \cdot F \cdot (\eta - I \cdot R_S - I \cdot R_{SEI})}{RT}} \right] \quad (III)$$

wherein I is the exciting current, N is the proportional coefficient obtained by fitting, $R_S$ is ohmic impedance, $R_{SEI}$ is interfacial impedance, $R_{CT}$ is charge transfer impedance, F is Faraday constant, R is gas constant, T is temperature of the three-electrode battery cell during a test, A is the electrochemical active surface area obtained by fitting, and $\eta$ is the positive electrode overpotential response.

6. A preparation method of a positive electrode material, wherein the preparation method is used for preparing the positive electrode material according to any one of claims 1 to 5, and the preparation method comprises the following steps:

primary calcination: calcining a nickel-cobalt-manganese ternary precursor to obtain an oxide precursor $P_1$;

secondary calcination: mixing the oxide precursor $P_1$ with a first lithium source, and calcining to obtain an oxide precursor $P_2$;

tertiary calcination: mixing the oxide precursor $P_2$ with a second lithium source, and calcining to obtain the positive electrode material.

7. The preparation method according to claim 6, wherein

an amount of substance $M_1$ of lithium element in the first lithium source and a sum of amounts of substances $M_0$ of nickel element, cobalt element and manganese element in the nickel-cobalt-manganese ternary precursor satisfy: $0 < M_1/M_0 \leq 0.8$;

an amount of substance $M_2$ of lithium element in the second lithium source, the amount of substance $M_1$ of lithium element in the first lithium source and the sum of amounts of substances $M_0$ of nickel element, cobalt element and manganese element in the nickel-cobalt-manganese ternary precursor satisfy: $1 - M_1/M_0 \leq M_2/M_0 \leq 1.05 - M_1/M_0$.

8. The preparation method according to claim 6, wherein process conditions of the primary calcination comprise: a heating rate of 2-5°C/min, a calcination temperature of 300-500°C, and a calcination time of 1-5h.

9. The preparation method according to claim 6 or 8, wherein process conditions of the secondary calcination comprise: a heating rate of 2-5°C/min, a calcination temperature of 600-1000°C, a calcination time of 2-8h, and a cooling rate controlled to 2-5°C/min.

10. The preparation method according to any one of claims 6, 8 or 9, wherein process conditions of the tertiary calcination comprise: a heating rate of 2-5°C/min, a calcination temperature of 600-1000°C, a calcination time of 6-20h, and a cooling rate controlled to 2-5°C/min.

11. The preparation method according to any one of claims 6 to 10, wherein in steps of the tertiary calcination, a dopant, the oxide precursor $P_2$ and the second lithium source are mixed and calcined;

wherein the dopant comprises at least one element of S, P, F, B, Al, Ti, Mg, Cr, Zr, V, Nb, Y, W and Ta.

12. The preparation method according to any one of claims 6 to 10, wherein the preparation method further comprises performing a sintering for modification on the positive electrode material for one or more times;

wherein the sintering for modification includes mixing and sintering the positive electrode material and a coating agent, and a sintering temperature of the sintering for modification is not more than 600°C;
wherein the coating agent comprises at least one element of Co, P, F, B, Al, Ti, Mg, Cr, Zr, Ce, W and Zn.

13. A battery, comprising the positive electrode material according to any one of claims 1 to 5.

FIG. 1

FIG. 2

FIG. 3

FIG. 4

FIG. 5

FIG. 6

FIG. 7

## INTERNATIONAL SEARCH REPORT

| International application No. |
| --- |
| **PCT/CN2023/142531** |

| A. | CLASSIFICATION OF SUBJECT MATTER |
| --- | --- |

H01M4/525(2010.01)i; H01M4/505(2010.01)i; H01M10/052(2010.01)i; H01M10/0525(2010.01)i; C01G53/00(2006.01)i

According to International Patent Classification (IPC) or to both national classification and IPC

| B. | FIELDS SEARCHED |
| --- | --- |

Minimum documentation searched (classification system followed by classification symbols)

    IPC: H01M C01G

Documentation searched other than minimum documentation to the extent that such documents are included in the fields searched

Electronic data base consulted during the international search (name of data base and, where practicable, search terms used)

    CNABS; CNTXT; VEN; USTXT; EPTXT; WOTXT; ISI; CNKI: 镍, 钴, 锰, 三元, 四元, 粒径, 压实密度, 第二, 二次, 两步, 分步, 多次, 锂, 烧结, 煅烧, nickel, cobalt, manganese, Ni, Co, Mn, 10%, 50%, 90%, D10, D50, D90, step, two, twice, double, firing, secondary, sinter+, calcin+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116598475 A (NINGBO RONBAY NEW ENERGY TECHNOLOGY CO., LTD.) 15 August 2023 (2023-08-15)<br>description, paragraphs [0004]-[0088] | 1-13 |
| A | CN 108923041 A (SHENZHEN DYNANONIC CO., LTD.) 30 November 2018 (2018-11-30)<br>description, paragraphs [0005]-[0126] | 1-13 |
| A | KR 20190129615 A (LG CHEMICAL LTD.) 20 November 2019 (2019-11-20)<br>entire document | 1-13 |
| A | CN 102983326 A (HENGDIAN GROUP DMEGC MAGNETICS CO., LTD.) 20 March 2013 (2013-03-20)<br>entire document | 1-13 |
| A | CN 106910882 A (UNIVERSITY OF JINAN) 30 June 2017 (2017-06-30)<br>entire document | 1-13 |
| A | CN 116143200 A (YIBIN LIBODE NEW MATERIAL CO., LTD.) 23 May 2023 (2023-05-23)<br>entire document | 1-13 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **06 February 2024** | **17 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/142531** |

**C.    DOCUMENTS CONSIDERED TO BE RELEVANT**

| Category* | Citation of document, with indication, where appropriate, of the relevant passages | Relevant to claim No. |
|---|---|---|
| A | CN 110518232 A (NINGDE CONTEMPORARY AMPEREX TECHNOLOGY CO., LTD.) 29 November 2019 (2019-11-29) <br> entire document | 1-13 |
| A | CN 114142037 A (TIANJIN B&M SCIENCE AND TECHNOLOGY CO., LTD.) 04 March 2022 (2022-03-04) <br> entire document | 1-13 |
| A | CN 114864923 A (BASF SHANSHAN BATTERY MATERIALS CO., LTD.) 05 August 2022 (2022-08-05) <br> entire document | 1-13 |

Form PCT/ISA/210 (second sheet) (July 2022)

INTERNATIONAL SEARCH REPORT
Information on patent family members

International application No.

**PCT/CN2023/142531**

| Patent document cited in search report | | | Publication date (day/month/year) | Patent family member(s) | | | Publication date (day/month/year) |
|---|---|---|---|---|---|---|---|
| CN | 116598475 | A | 15 August 2023 | CN | 116598475 | B | 17 November 2023 |
| CN | 108923041 | A | 30 November 2018 | CN | 108923041 | B | 08 December 2020 |
| KR | 20190129615 | A | 20 November 2019 | KR | 102204939 | B1 | 19 January 2021 |
| CN | 102983326 | A | 20 March 2013 | CN | 102983326 | B | 29 April 2015 |
| CN | 106910882 | A | 30 June 2017 | CN | 106910882 | B | 23 April 2019 |
| CN | 116143200 | A | 23 May 2023 | CN | 116143200 | B | 01 August 2023 |
| CN | 110518232 | A | 29 November 2019 | US | 2023246184 | A1 | 03 August 2023 |
| | | | | US | 2022052338 | A1 | 17 February 2022 |
| | | | | ES | 2934943 | T3 | 28 February 2023 |
| | | | | EP | 3951946 | A1 | 09 February 2022 |
| | | | | EP | 3951946 | A4 | 15 June 2022 |
| | | | | EP | 3951946 | B1 | 30 November 2022 |
| | | | | WO | 2020220662 | A1 | 05 November 2020 |
| | | | | EP | 4148830 | A2 | 15 March 2023 |
| | | | | EP | 4148830 | A3 | 05 April 2023 |
| | | | | EP | 4148830 | B1 | 09 August 2023 |
| CN | 114142037 | A | 04 March 2022 | | None | | |
| CN | 114864923 | A | 05 August 2022 | CN | 114864923 | B | 21 November 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310705475X

**Non-patent literature cited in the description**

- Electrochemical Systems. John Wiley and Sons Ltd.